# EUROPEAN PATENT APPLICATION

(11) **EP 2 522 211 A2**
(43) Date of publication of application: **14.11.2012**
(21) Application number: 10832687.7
(22) Date of filing: 04.11.2010
(51) Int. Cl.: A01G 1/06

(54) **PLANT GRAFTING MACHINE AND PLANT GRAFTING METHOD**

(30) Priority: 24.11.2009 ES 200931043
(71) Applicant: Repiso Cordon, Joan, 08191 Rubí Barcelona (ES)
(72) Inventor: Repiso Cordon, Joan, 08191 Rubí Barcelona (ES)
(74) Representative: Isern-Jara, Nuria
(86) International application number: PCT/ES2010/070711
(87) International publication number: WO 2011/064426

(57) **Abstract**

The invention relates to a plant grafting machine (1) and method, the machine being provided for performing automatic grafos, including a means for holding plant stalks and a means for cutting said stalks, and a grafting means for joining the cut stalks, by means of a clamp (11) provided by a grafting unit. The holding means includes two mutually opposed runners that can move axially by means of an actuator means, said runners (4,5) being associated with the cutting means in order to made a bevel cut and, when viewed from above, said runners are offset on two parallel axes such that, during the grafting process, said two cut stalks are mutually aligned. Said grafting means includes an continuous supply belt from which the clamp (11) is obtained, a secondary cutting means for forming the clamp (11), and a placement means located in front of the supply belt for placing the clamp.

## Description

### OBJECT OF THE INVENTION

This patent application is to register a plant grafting machine and a plant grafting method that incorporates significant innovations and advantages compared to other machines with similar characteristics.

More specifically, the invention relates to a plant grafting machine comprising a bedplate provided with fastening means for plant stalks and cutting means for cutting the stalks and grafting means for attaching the cut stalks by using an elastically deformable plastic clamp provided by means of a grafting unit operated by a control unit.

### BACKGROUND OF THE INVENTION

Grafting machines for the agricultural industry are currently well known, which perform almost automatically the cutting of stalks, branches or other plant organs by the use of cutting means to be subsequently firmly attached by means of a clamp or similar made from plastic material, such as the clamp described in the Spanish patent no. ES 2 223 237.

However, one drawback found in current machines stems from the clamp feeders which are usually arranged individually in a hopper and supplied via a chute. This characteristic has the main drawback that the clamps can jam while the machine is being operated, such that machine downtime occurs which negatively affects productivity and requires an operator to monitor the machine.

Another drawback found in this type of machine known in the prior art is the complexity of the various mechanisms used for separating the stalk from the leaves, such that higher costs for maintenance operations and manufacture are involved.

### DESCRIPTION OF THE INVENTION

The invention herein has been developed with the aim of providing a grafting machine that resolves the aforementioned drawbacks, further providing other additional advantages that will be apparent from the description detailed hereinafter.

It is therefore an object of the present invention to provide a plant grafting machine being provided to perform a graft automatically, of the type comprising a bedplate provided with fastening means for stalks and cutting means for cutting the stalks and grafting means for attaching the cut stalks by using an elastically deformable plastic clamp provided by means of a grafting unit operated by a control unit. More particularly, said machine is characterized by the fact that the fastening means comprise two runners facing each other, being axially moveable by actuation means, whose runners are connected to cutting means for making a bevel cut and each one secures a corresponding stalk to be joined, such that the two runners, in plan view, are moved in two parallel axes such that, in a grafting condition, said two cut stalks are aligned on an axis perpendicular to the longitudinal axis of the runners next to the grafting unit.

The grafting unit comprises a feeder with a continuous band made from plastic material from which the plastic clamp is obtained, including means for moving the continuous band, secondary cutting means making it possible to cut a section of the continuous band with a predetermined length to form the clamp, and means for placing the clamp situated in front of the feeder to place the clamp previously formed between the two plant stalks to be joined, actuated automatically.

Thanks to these characteristics, a reliable machine is obtained which can work continuously and without interruptions in respect to the supply of the clamp to secure the two stalks to be joined. Furthermore, unlike other known machines, the machine of the invention does not require a robotic device for handling and placing plant stalks to perform the grafting operation, such that a smaller space is occupied and is more cost-effective and incorrect placement of the stalks for the bonding operation is avoided. Another no less important advantage compared to prior art is the fact that it does not require a storage tank for clamps or a connected pneumatic feeder system where they can be tamped when the machine is operating, resulting in the machine shutting down and requiring the disassembly of the feeder system.

Other characteristics and preferred embodiments of this invention are described in the dependent claims.

The fact that the actuation of the various mechanisms that make up the grafting machine previously described are pneumatic piston-cylinders greatly simplifies the construction of the machine and, therefore, manufacturing and maintenance costs are reduced.

According to another aspect of the invention, the secondary cutting means have a blade fixed to a support element axially movable upwards/downwards to the bedplate by means of pneumatic actuator means, whose blade is located after an outlet of the continuous band. Advantageously, the blade is arranged on a plane inclined to the horizontal plane which facilitates cutting of the continuous band, unlike being on a completely horizontal plane, which could hinder the pressure on cutting the band to form the clamp.

Advantageously, the secondary cutting means include guiding means for guiding the movement of the support element, which comprise fixed pins in the bedplate that pass through holes made in the support element.

It is another object of the present invention to provide a new plant grafting method, whose grafting occurs from joining two plant stalks together by means of a clamp made from plastic material, wherein the clamp is obtained from a continuous band cut with a predetermined length by automatic means in one duty cycle which is performed in one cutting stage of the plant stalks to be joined and an aligning stage of the two plant stalks.

More specifically, the cutting stage of the continuous band is performed synchronously with respect to the cutting stages of the plant stalks and alignment of these via a grafting machine control unit as described.

Other characteristics and advantages of the grafting machine object of the present invention will become apparent from the description of a preferred, although not exclusive embodiment, which is illustrated by way of non-limiting example in the drawings appended.

### BRIEF DESCRIPTION OF THE DRAWINGS

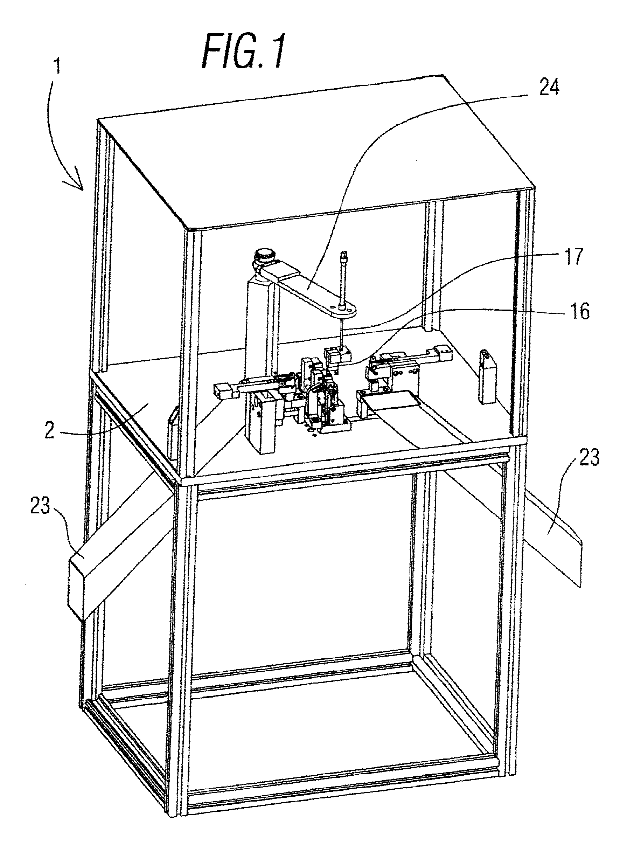

Figure 1.- Perspective view of the grafting machine of this invention where the actuator means have been omitted for ease of understanding.

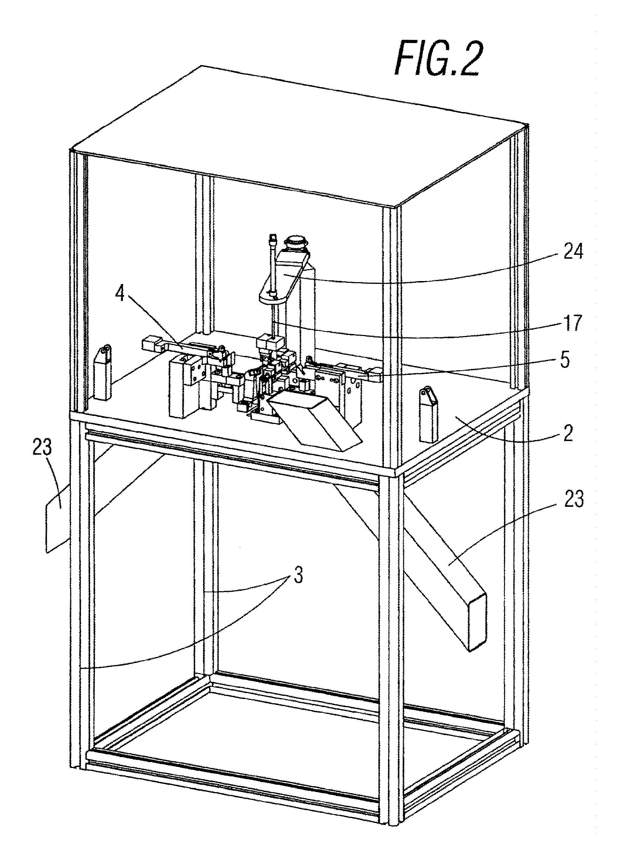

Figure 2.- Perspective view from another angle of the grafting machine of the invention.
Figure 3.- Enlarged detail view of part of the machine of the invention in which the runners can be seen.

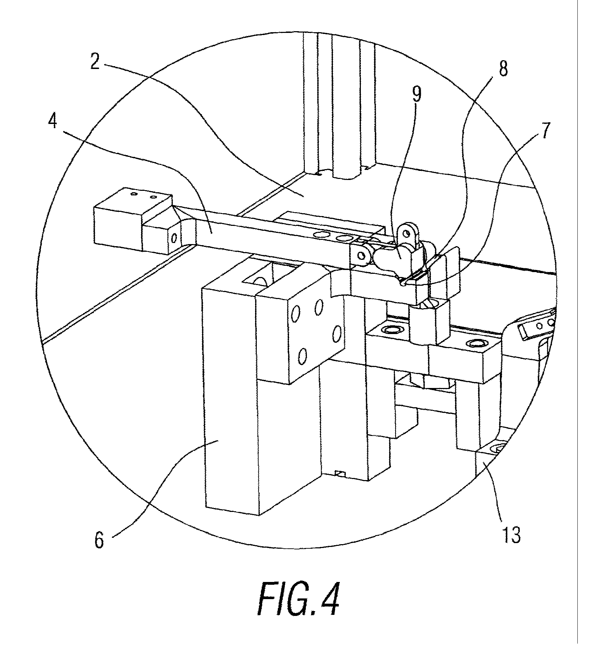

Figure 4.- Enlarged detail view of another part of the machine of the invention where a runner can be seen.

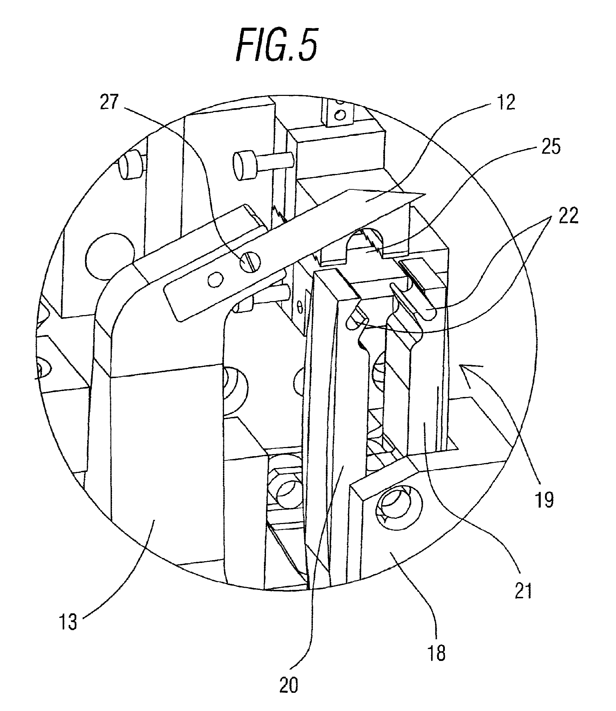

Figure 5.- Enlarged perspective view of a part of the machine where the secondary cutting means can be seen.
Figure 6.- Perspective view of the machine which includes a reel.
Figure 7.- Perspective view of a clamp obtained with the machine of the invention and used for attaching two cut stalks, and
Figure 8.- Perspective view of final assembly obtained with the machine of the invention formed by the clamp and two plant stalks joined and attached together.

### DESCRIPTION OF A PREFERRED EMBODIMENT

As shown in the attached figures, a particularly preferred embodiment of the grafting machine generally indicated by reference number 1 comprises a bedplate formed by a horizontal metal platform supported by two support legs 3, provided with stalk fastening means and cutting means for cutting the stalks, which are described below, and grafting means for attaching the cut stalks by using an elastically deformable plastic clamp provided by means of a grafting unit operated by a control unit and described below.

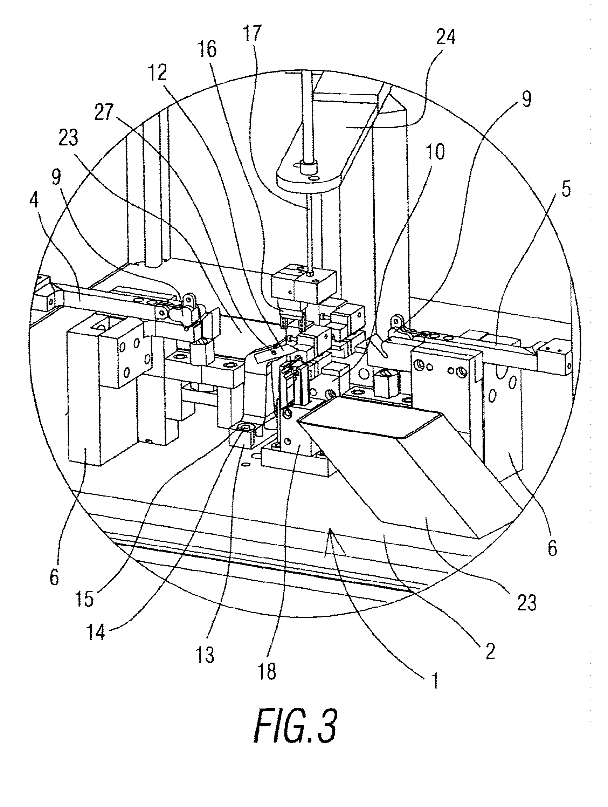

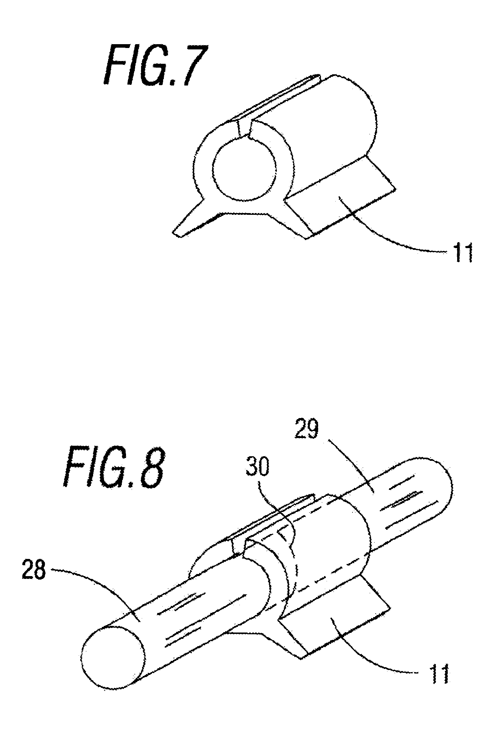

The aforementioned fastening means essentially comprise two runners 4, 5 axially supported by a base metal 6 by means facing one another and can be moved by actuation means, whose runners are connected to the cutting means for making a bevel cut, each one securing a corresponding stalk to be joined, so the two runners 4, 5, in plan view, are moved on two parallel axes such that in a grafting condition the two cut stalks are aligned on an axis perpendicular to the longitudinal axis of the runners near the grafting means. The aforementioned metal base 6 includes a grooved portion 7 which is aligned with the grooved section 8 of the corresponding runner 4, 5 on which the plant stalk to be cut is rested. The aforementioned cutting means consist of blades arranged inclined to the longitudinal axis on which the plant stalks to be cut are positioned and make an upward/downward movement for the cutting operation, such that the blade is housed between the movable part of the runner 4, 5 and the metal base 6. As previously mentioned each of the runners 4, 5 includes a grooved section 8 (see figure 3) located transversely to the longitudinal axis of the runner 4, 5 which is open at the upper part for affixing the plant stalk, each of the runners 4, 5 including a pressure element 9 that can be actuated by means of a pneumatic piston-cylinder (not shown for clarity) which, in an operating condition, holds the stalk tightly within the grooved portion 7 when the stalk is cut.
Preferably, the pressure element 9 is provided with a damping cushion located at the point where it comes into contact with the plant stalk and is made of rubber, for example, which cushions the blow on the plant stalk to prevent damage or breakage depending on the diameter of the stalk.
Now, with particular reference to the grafting means which basically comprise a feeder indicated generally by reference number 10 that supplies a continuous band made from plastic from which the plastic clamp 11 is obtained (see the clamp design in greater detail in Figure 7), including means for moving the continuous band, and secondary cutting means for cutting a section of the continuous band with a predetermined length established in the control unit for shaping the plastic clamp. Additionally, affixing means 11 for the clamp are provided which are located in front of the feeder 10 for placing the clamp previously formed between the two plant stalks to be joined, operated in an automated manner. Actuator means for movements and displacements comprise pneumatically actuated piston-cylinders connected to solenoid valves operated by the control unit, which are connected to pressurized air supply chutes connected to a general supply of pressurized air.

The aforementioned secondary cutting means have a removable blade 12 fixed to a support element 13 by means of screws 27, whose support element 13 can be axially moved upwards/downwards to the platform by means of pneumatic actuator means, said blade 12 located after an outlet 25 of the continuous band. Advantageously, the blade 12 is arranged on a plane inclined to the horizontal plane to facilitate the cutting operation.

Additionally, guiding means for guiding the movement of the support element 13 are included, which comprise vertical pins 14 fixed in the bedplate which pass through holes 15 made in a support element.

As shown in the figures, the grafting machine 1 of the embodiment described herein comprises means for removing the clamp 11 with two plant stalks joined together, such removal means being a robotic arm indicated generally by reference 24 located at the back, that can rotate on its own vertical axis and is provided with a clamp 16 located on the far end of the robotic arm for gripping the clamp 11. Said clamp16 is coupled to a rod 17 which can move vertically upwards/downwards via a guide on the robotic arm and by means of a pneumatic piston-cylinder. Said rod 17 passes through a hole made in a horizontal bar of the robotic arm 24.

The aforementioned positioning means of the clamp 11 comprise a verticallymovable base plate 18 and are connected to pneumatic actuator means for movement, whose base plate 18 is provided with a clamp formed by two plates 20, 21 between which an elastic element is arranged to hold the clamp after exiting the feeder while, in a condition of removal of the clamp 11, said plates 20, 21 move between each other to release the clamp 11 with the aid of a cam or eccentric which facilitates the angular movement of such two plates 20, 21. Each of the plates 20, 21 has a grooved section 22 which the clamp is compactly inserted into. Said elastic means consist of a coil spring in this embodiment.

Operating the grafting machine 1 described above can be performed easily by an operator via a hand or foot pushbutton which can be located at the front of the machine, which sends a command signal to the control unit to run the duty cycle.

To better understand the invention, an operating cycle of the grafting machine 1 described above is outlined below where all operations are performed in a synchronized manner by the control unit.

Firstly, the operator manually places a plant stalk in the grooved section located in each of the two runners after which the corresponding pressure elements operate.

Then, the cutting means described above and linked to each runner 4, 5 are actuated simultaneously such that each of the two stalks located on each corresponding runner 4, 5 are bevel cut, with the cutting direction of one of them complementing the cutting direction of the other stalk to be joined, throwing the surplus unusable stalks into removal chutes 23 located near each of the runners 4, 5. Those surplus stalks fall by gravity into a storage tank (not shown).

Next, the two runners 4, 5 move linearly towards a central point where the positioning means are located, such that the two plant stalks are axially aligned and fitted to each other via bevel cuts.

After, the continuous band is cut as the blade 12 of the secondary cutting means is moved downwards to obtain an individual clamp 11, whereupon the base plate rises which forms part of the positioning means for positioning and placing the clamp 11 at the point where the two plant stalks join.

Finally, the robotic arm lowers the clamp until positioning itself at the point where the clamp is located for gripping and after releasing the clamp 11 the assembly formed by the clamp 11 and the two stalks 28, 29 (see Figure 8) is held and transported to be deposited at another point of the bedplate, after which the clamps are retracted to their original position and, therefore, the grafting machine 1 is ready to begin a new duty cycle. In Figure 8 the hidden section of stalk in a portion of the clamp and the bevel connection between both stalks 28, 29 is shown by broken lines.

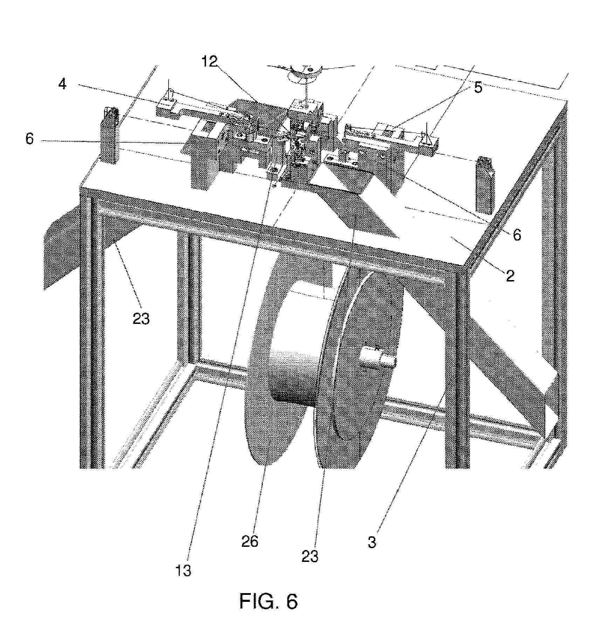

Note that each duty cycle may last approximately 3 seconds.
As can been seen in Figure 6, a reel can be arranged at the lower end of the grafting machine of the invention for supplying the continuous band the clamp 11 will provide, said reel being secured by conventional fastening means.

The details, shapes, dimensions and other accessory elements as well as the materials used in the manufacture of the grafting machine of the invention may be conveniently replaced by others that are technically equivalent and do not depart from the essential nature of the invention or from the scope defined by the claims outlined below.

## Claims

1. Grafting machine (1) for plants, provided to perform a graft automatically, comprising a bedplate provided with fastening means for plant stalks and cutting means for cutting the stalks and grafting means for attaching cut plant stalks by using an elastically deformable plastic clamp (11) provided by means of a grafting unit operated by a control unit, **characterised by the fact that**:
said fastening means comprise two runners (4, 5) facing each other axially moveable by actuation means, whose runners (4, 5) are connected to the cutting means for making a bevel cut, each one securing a corresponding stalk to be joined, such that the two runners (4, 5), in plan view, are moved in two parallel axes such that in a grafting condition said two
cut plant stalks are aligned on an axis perpendicular to the longitudinal axis of the runners (4, 5) next to grafting unit, and
wherein said grafting unit comprises:
a feeder of a continuous band made from plastic material from which the plastic clamp (11) is obtained, including means for moving the continuous band,
secondary cutting means making it possible to cut a section of the continuous band with a predetermined length to form the clamp (11), and
positioning means of the clamp located in front of the feeder to place the previously made clamp (11) between the two plant stalks to be joined, actuated automatically.

2. Grafting machine (1) according to claim 1, **characterised by** the fact that the actuator means comprise pneumatically-actuated piston-cylinders and connected to solenoid valves operated by the control unit.

3. Grafting machine (1) according to claim 1, **characterised by** the fact that the secondary cutting means have a blade (12) fixed on a support member (13) axially movable upwards/downwards to the bedplate by pneumatic actuator means, whose blade (12) is located after an outlet of the continuous band provided by the clamp (11).

4. Grafting machine (1) according to claim 3, **characterised by** the fact that the blade (12) is arranged on a plane inclined to the horizontal plane.

5. A grafting machine (1) according to claim 3, **characterised by** the fact that the secondary cutting means include guiding means to guide the movement of the support element (13).

6. Grafting machine (1) according to claim 5, **characterised by** the fact that the guiding means comprise pins (14) fixed to the bedplate, passing through holes (15) made in the support element (13).

7. Grafting machine (1) according to claim 1, **characterised by** the fact that evacuating means are provided for the surplus stalk section to exit outside the bedplate.

8. Grafting machine (1) according to claim 7, **characterised by** the fact that the evacuating means consist of chutes (23) arranged near a corresponding runner such that the surplus stalks fall by gravity.

9. Grafting machine (1) according to claim 1, **characterised by** the fact that each of the runners (4, 5) includes a grooved section located transversely to the longitudinal axis of the runner which is open at the upper part for affixing the plant stalk, including a pressure element (9) that can be actuated in an operating condition to hold the stalk tightly within the grooved section.

10. Grafting machine (1) according to claim 9, **characterised by** the fact that the pressure element (9) is provided with a damping cushion pad located at the point where it comes into contact with the plant stalk.

11. Grafting machine (1) according to claim 10, **characterised by** the fact that the pressure element (9) is pivotally attached to a pneumatically actuated piston-cylinder.

12. Grafting machine (1) according to claim 9, **characterised by** the fact that the grooved section has a section decreasing in a downward direction.

13. Grafting machine (1) according to claim 9, **characterised by** the fact that each runner (4, 5) is supported by a base (6), whose base (6) includes a grooved portion (7) which is aligned with the grooved segment (8) of the runner (4, 5) on which the plant stalk to be cut rests when the plant stalk is cut.

14. Grafting machine (1) according to claim 1, **characterised by** the fact that the aforementioned positioning means of the clamp comprise a vertically movable (18) base plate and connected to pneumatic actuator means for movement, whose base plate (18) is provided with a clamp formed by two plates (20, 21) between which an elastic element is arranged to hold the clamp after exiting the feeder while in a condition of removal of the clamp (11), said plates move between each other to release the clamp (4, 5).

15. Grafting machine (1) according to claim 14, **characterised by** the fact that each of the plates (20, 21) has a grooved section which the clamp (11) is compactly inserted into.

16. Grafting machine (1) according to claim 14, **characterised by** the fact that the aforementioned elastic means are in a coil spring.

17. Grafting machine (1) according to claim 1, **characterised by** the fact that it comprises means for removing the clamp (11) with two plant stalks joined together, such removal means being a robotic arm that can rotate on its own vertical axis and is provided with a clamp located on the far end of the robotic arm.

18. Plant grafting method, whose grafting occurs by joining two plant stalks together by means of a plastic clamp, **characterised by** the fact that the clamp is obtained from a continuous band cut with a predetermined length by automatic cutting means in one duty cycle which performs one cutting stage of the plant stalks to be joined and an aligning stage of the two plant stalks.

19. Plant grafting process according to claim 18, **characterised by** the fact that the cutting stage of the continuous band is performed synchronously with respect to the cutting stages of the plant stalks and alignment of these via a grafting machine control unit as described in claim 1.
